# EUROPEAN PATENT APPLICATION

(11) **EP 0 526 090 A2**
(43) Date of publication of application: **03.02.1993**
(21) Application number: 92306705.2
(22) Date of filing: 22.07.1992
(51) Int. Cl.: G09B 23/18

(54) **Teaching kit**

(30) Priority: 22.07.1991 GB 9115789
(71) Applicant: LEKTRO TECHNOLOGY LIMITED, Alton, Hampshire GU34 1DL (GB)
(72) Inventor: Johnston, Edward, Southampton SO2 7HT (GB)
(74) Representative: Perkins, Sarah

(57) **Abstract**

A teaching kit comprises a board (1) and a plurality of component tiles (5). Each component tile bearing an electrical or electronic component (4) and connector means (9) such that the component tiles (5) may be connected together to form a circuit. The board (1) and each of the component tiles (5) has cooperable magnetic means so that once a component tile has been positioned on the board it is held magnetically in position. Thus with the teaching kit, children using the kit can build their own circuits and learn electrical theory or electronics as they do so.

## Description

The present invention relates to a teaching kit for the teaching of electrical and electronic theory particularly but not exclusively in a school environment and specifically to the apparatus of the teaching kit.

A need has become increasingly evident for equipment for use in teaching science in schools which permits the children being taught as much "hands-on" experience as possible. The advantages to teaching science with a kit which permits the child to experiment for his or herself have long been acknowledged since this encourages an interest in science and makes science more "real" for the child.

The overriding preoccupation in the development of teaching aids in the science subjects seems to be upon medium level electronics i.e. operational amplifiers, logic devices, etc. However, if it can be ensured that the initial introduction to electronics for school children was easy, interesting or even exciting then those going on to learn about operational amplifiers, etc. would be better educated, more articulate in the subject and consequently more confident in their knowledge.

The present invention seeks to provide therefore a teaching kit which may be easily used by children in either a home or school environment.

The present invention therefore provides apparatus comprising a board; and a plurality of component tiles, each tile bearing one or more electrical or electronic components and connector means for enabling the connection of at least one component on a first component tile with a component on a further component tile wherein the board and the plurality of component tiles have co-operable magnetic means whereby the component tiles may be moved about the board and when in a selected position on the board are held in position magnetically.

Since the component tiles are held in position on the board magnetically, the tiles may be moved around the board at will but are not easily accidentally disloged. Additionally, when the apparatus is not in use, all the component tiles may be mounted on the board or an alternative magnetic surface and held in position magnetically thus reducing the risks of component tiles being lost or damaged through component tiles accidentally colliding when the apparatus is being moved.

In a preferred embodiment the apparatus is in the form of a box with the board located on an inner surface of the front cover of the box.

An oscilloscope may also be provided with the apparatus. Ideally, the oscilloscope is integral with the board and supplies the power to the electrical components on the component tiles.

For a better understanding of the present invention and to show how the same may be carried into effect, reference will now be made by way of example, to the accompanying drawings:
Figure 1 is a partially cut-away perspective view, not to scale, of apparatus according to the present invention;
Figure 2 is an enlarged view of a component tile of Figure 1; and
Figure 3 is a schematic perspective view of a further embodiment of apparatus according to the present invention.

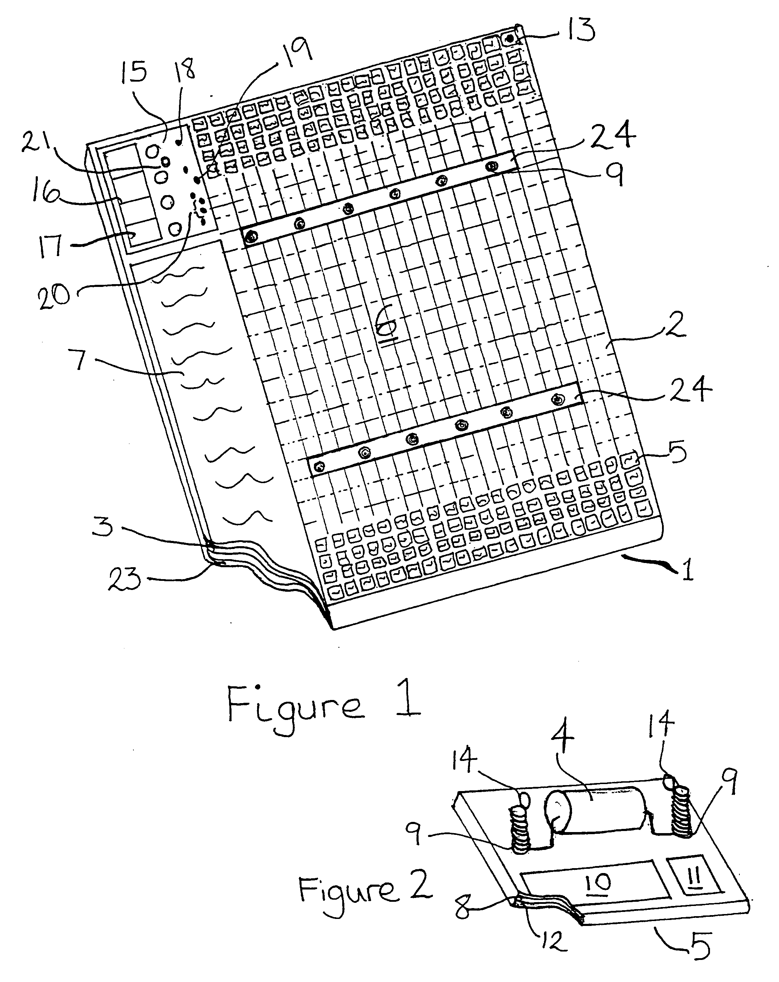

The apparatus shown in Figure 1 comprises a board 1, 500mm x 400mm, with a light coloured plastic top surface 2, a 2 year vinyl for example, for write-on/wipe-off drawing. Under this surface is placed a layer of 60 micron steel shim 3, which functions as a magnetic underlay. The board 1 carries several rows of components. Each component 4 is mounted separately on its own small plate, called a tile 5. The tiles when not in use are arranged on the board 1 in storage rows. There are 4 storage rows at the bottom of the board 1 and 4 storage rows at the top of the board 1. The central area 6 remaining is the working area. On the central area 6, components on the tiles 5 taken from their storage rows may be arranged in circuits, connected up and operated. To the left hand side of the working area basic technical information 7 can be printed, for example the resistor colour code.

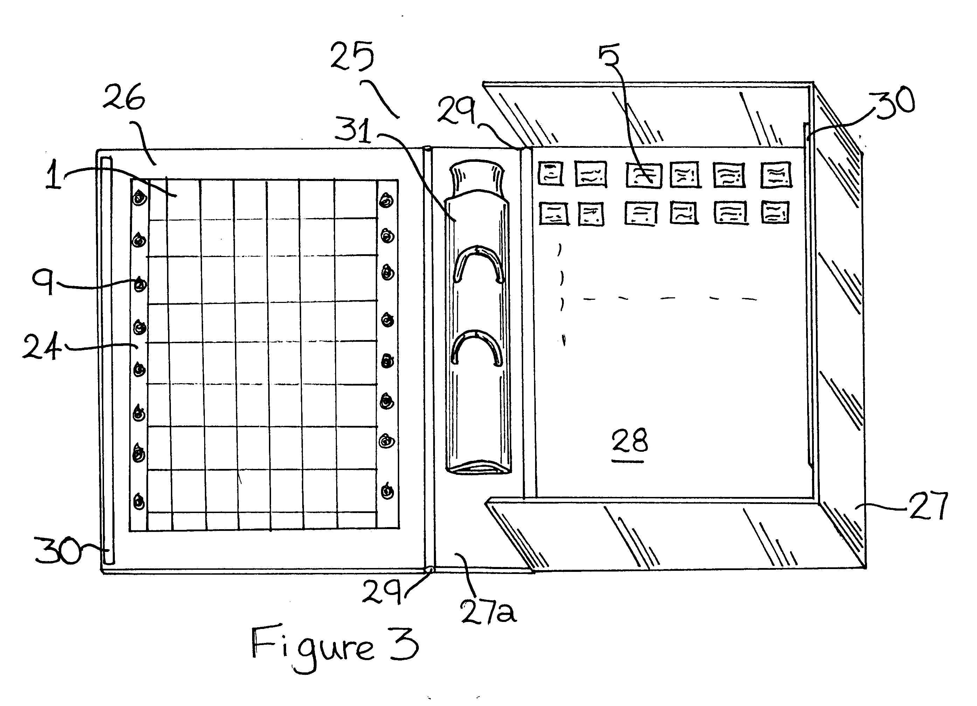

Each tile 5 is a piece of P.C.B. material 25mm square upon which is mounted one component 4, ie. a resistor or a transistor, etc. In Figure 2 a resistor is shown. To the back of the tile 5 is fixed a piece of plastic magnetic material 8, approximately 1mm thick. This enables the tile to cling to the surface of the board 1 and to remain firmly where it is placed. Even if the board 1 is turned upside down, all of the tiles 5 will remain where they are placed. Also mounted on the face of the tile 5 are two, or more connection points 9 to enable quick connection to be made to the component 4. Most tiles 5 will carry a label 10 identifying the component 4 and giving its colour code 11, when appropriate. Further information about the component, shape, size, symbolic style, etc. will be shown in another label 12 attached to the base of the tile 5. The label 12 may be made of clear film with the data printed in reverse so that, the data will be seen through the film and therefore not subject to wear.

Colour will be used to help teachers and pupils to identify types of components. For example, all the tiles carrying resistors may be coloured orange, with capacitor tiles coloured light blue, inductors dark blue, transistors yellow, etc. Information sheets pertaining specifically to those components could also be of the same colour, thus making reference intuitively obvious. Similarly the board 1 will be lightly coloured to mark the positions of the different tiles in the storage rows. Thus, if any tile is missing it will be immediately obvious to teacher and pupil alike. The list of components which may be included is quite comprehensive. Nominally, there will be 8 storage rows of tiles with 20 tiles per row, making 160 tiles.

The following is a suggested schedule of the components that may be provided with the board.

### Resistors.

There are two of each of the following 20 values of resistor.

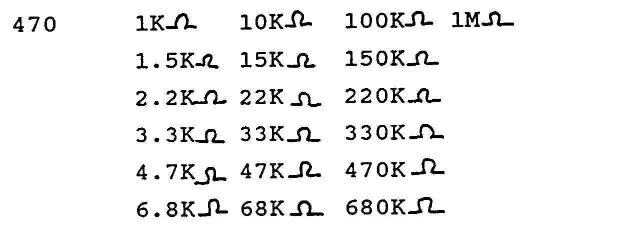

Each is a 0.5 watt, 1%, metal film type.

### Capacitors.

There are two of each of the following 15 values of capacitor.

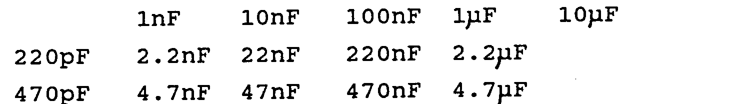

Each is a polyester film type 5% or 10%, 100 volt working.

### Inductors.

There are two of each of the following 5 values of inductor.

1µH 10µH 100µH 1mH 10mH

Each is a low resistance type, 30mA, Q=40, typically.

### Transistors.

There are ten transistors. Each is an NPN type typically BC237.

### Diodes.

There are ten diodes. Each is a signal type typically 1N4148.

### Light Emitting Diodes.

There are five of each of the following colours of LED.

Red, Yellow, Green, Red/Green

Each is a surface mounting device.

### Switches.

There are five momentary contact push button switches SPST.

There are two, 2-position, changeover slide switch DP.

There is one, 3-position, changeover slide switch DP.

There is one magnetic reed switch class A, normally open.

There is one magnet to operate the above reed switch.

### Relay.

There is one relay with DPDT contacts.

### Conductors & Insulators.

There are five tiles, each with a link of different material.

Copper, Steel, Carbon, Plastic, Wood

### Special Components.

There are the following numbers and types of other components;
One wirewound potentiometer 100KΩ 1 Watt
One carbon track potentiometer 10KΩ 0.2 Watt
One thermistor, negative temperature coefficient 10K
One light dependent resistor ORP-12. 10KΩ @ 10lux
One DC motor
One Infra-red transmit/receive reflective sensor
One ultrasonic transmitter 40KHz
One ultrasonic receiver 40KHz
One piezo-electric transducer, a speaker
One bobbin to hold 30 metres of 35swg wire 13
One audio transformer 2:1+1 ratio.

Wire on the bobbin 13 is used to represent the pencil lines of the circuit diagram that link the various components with the ends of individual pieces of wire being trapped in connectors 9.

The connector 9 is a close coiled steel spring, an extension spring. By bending the spring the coils will open up and a thin piece of wire may be introduced between two of the coils; when the spring is released the coils close and grip the wire tightly, making a good electric connection. The spring is ground flat at one end and has a loop 14, for holding, at the other end. The spring is positioned upright on the tile 5 with, its flat end soldered to the tile 5. Since steel springs rust easily and are difficult to solder, the springs are nickel plated so that they are easily soldered, they will not rust, they look attractive and will not mark fingers. The size of the springs 9 is important; a diameter of 4.5 millimetres is preferred. It has been found that if the diameter is bigger, the result looks clumsy and does not hold the wire as tightly. The sizes and proportions of tile and spring mean that a tile can carry 8 springs around a central component and still be easy to use and interconnect.

It has been found that when assembling a prototype electronics board, the most common source of unreliability is in the connection of the parts. When using insulated wire it is necessary to ensure that the insulation is properly removed and a good connection made. If non-insulated wire is used, ie. tinned copper wire then there is no problem making a good connection, however, there is the possibility that two wires may touch and cause a short circuit but this would be a minor problem and readily visible. The power supply may be arranged to shut down safely on such an occurrence. 35swg wire, diameter 0.2mm, may be provided on the bobbin 13 since it is easy to snap with the fingers but strong enough to hold a shape when bent.

An oscilloscope 15 may also be provided with the board 1. Since the board 1 is flat and the pupils will be expected to build their circuits on the flat working surface 6, ideally, the oscilloscope 15 blends into this flat scene. The oscilloscope 15 has an LCD display 16, 256 dots x 64 dots; which gives a viewing area of 126mm x 37mm. The display 16 stands on end to give a long thin display but is divided into four equal squares 17 of 64 x 64 dots each. These four squares are arranged as four separate viewing screens, upon which can be displayed four separate signals at the same time.

The LCD display 16 may be set up to display the contents of a 16Kbit random access memory (RAM). Apart from text characters the display 16 will display graphics; for instance a sine wave shape or anything that is produced by the circuits that are built upon the board 1. There will be four spring connectors 18, one connector each for the four screens. Each input goes first of all to a high impedance buffer amplifier in order that the oscilloscope will not overload the circuit and cause distortion to the incoming waveform. From the buffer amplifier the signal passes to a fast (ie. flash) analogue to digital converter, to be sliced up into 50 amplitude levels and 64 time slices. This conversion is scaled and synchronised and stored in the 16Kbit RAM so that the LCD display 16 will display the result of the operation of the circuit built on the board. The above description relates to only one screen looking at one signal. In fact the analogue to digital converter is connected to the output of a fast multiplexor which will enable a user of the board to look at four different signals as they are happening time-slice by time-slice. The signals could take any time from a few microseconds to many seconds. Hence, in order that the oscilloscope is able to cope with these different times a timebase switch 19 is provided with twelve positions marked in a 1.2.5 progression offering times from 10 microseconds to 50 seconds. Since this produces more than 12 timebases a two position switch is used that offers the "fast" or "slow" set of 12 timebases. As an example, if the user were looking at a 1Khz sinewave and the timebase switch 19 is set to 1 millisecond one complete cycle of the sinewave would be seen on the screen. The time selected on the switch relates to the complete length of the display from left hand edge to right hand edge. These times will be crystal generated and thus accurate and stable to 30 ppm.

The oscilloscope 15 may also provide the power supply 20 for the board 1. Preferably, the oscilloscope 15 will take in any ac or dc voltage from 6v to 30v and provide 5v regulated at 100 milliamps. This will be the most current that can be safely used on the board, giving a maximum power of 0.5 watts. If by any accident or design more current is called for the supply will automatically shut down until the requirement is reduced to 100 milliamps or less. Power supply "on" will be indicated by an LED 21 showing green, power supply "shutdown" will be shown by the LED 21 showing red. If more than 30v is applied to the power supply it will still regulate but in time a thermal trip will operate, depending upon the current requirement. When the thermal trip operates the LED 21 will show orange.

It is convenient for the oscilloscope 15 to also act as the source of a useful signal. Hence the oscilloscope 15 is arranged to provide a 1Khz sine wave at 1volt rms capable of driving a 50 ohm load without degradation.

Finally, text may also be displayed on the oscilloscope 15. A 2M bit EPROM is provided, which offers 128 pages of text. Turned sideways this would be a display of 8 lines of 40 characters. This may be used as another source of formulae, facts and features for pupils and teachers.

Instead of an oscilloscope a volt meter may be provided on the board 1. The volt meter is auto-ranging and may provide the power supply in the same manner as that described with reference to the oscilloscope.

Alternatively, the power may be supplied by batteries (not shown) similarly mounted on a tile 5. Whether the power is supplied by an oscilloscope, a voltmeter or batteries the power supply is connected to two power rails 24 mounted adjacent the component tile storage rows on the board 1. Each power rail 24 has a number of connectors 9 mounted on the rail (six are shown in Figure 1) to permit connection between components positioned on the working area and the power supply. The connectors 9 on the power rails 24 are identical to the connectors 9 provided on the component tiles. One of the power rails acts as the live power supply with the other power rail acting as the earth. If necessary, a third power rail could be provided to act as a negative power rail.

Other electrical and electronic components may be provided with the board 1, an amplifier and speaker for example. Similarly, alternative collections of components maybe provided in so far as such collections of components allow the user to build a wide variety of different circuits.

Instructions for use are provided on information sheets and work sheets held in two pockets 23 on the back of the board. These are equivalent to teachers notes and pupil notes.

An example of the type of simple circuit construction which may be performed with the teaching kit is as follows:
Take a "Battery" tile from the storage area and place it upon the work area; similarly with a "Bulb" tile. Take a length of wire and connect it to one of the connectors on the battery tile by bending the spring, inserting one end of the wire and releasing the spring. Similarly, connect the other end of the wire to one of the connectors on the bulb tile. Repeat the operation with another length of wire between the remaining connectors on the battery and bulb tiles. As the last connection is made the bulb will light. The electrical circuit is complete and can be seen and traced.

A similar exercise with two or more of the various resistor tiles may be performed with the resistor connected in series between the two power rails to investigate potential divider effects. The power rails in turn are then connected to a battery tile for the power supply. The results may be measured by connecting the auto-ranging voltmeter into the circuit.

In Figure 3 an alternative teaching kit is shown in which the board 1 is provided on the inside front cover of a box 25. The box 25 may be a variety of sizes depending upon the number and complexity of the components intended to be used with the kit. Ideally the box may be A5, A4 or A3 size when closed.

The box 25 has a front cover 26, side walls 27 and a back wall 28. One of the side walls 27a is connected to the front and back walls 26, 28 along edges 29, which act as hinges. In this way the box 25 may be closed by moving the side wall 27a so that it is perpendicular to the back wall 28 and then folding the front cover 26 over so that it closes the space defined by the back wall 28 and the side walls 27. The box 25 is shown in its open state in Figure 3 in which the back wall 28, side wall 27a and front cover 26 all lie in the same plane.

The front cover 26 has a magnetic strip 30 adjacent to its free edge furthest from the side wall 27a. A corresponding magnetic strip 30 is provided on an upper edge of an opposing side wall 27 so that when the box 25 is closed the two magnetic strips 30 cooperate to hold the front cover 26 in the closed position.

On the inside front cover 26, a board 1 similar to that described earlier with reference to Figure 1 is provided. However, the board 1 has only two power rails 24 with connectors 9 (8 are shown in Figure 3) mounted on it when the board is not in use. Beneath the surface of the board 1 a metal plate (not shown) similar to that described with reference to Figure 1 is provided.

The back wall 28 of the box 25 has a similar metal plate and in the space defined by the back wall 28 and side walls 27 the component tiles 5 are stored when not in use. Since the back wall 28 also has a metal plate the component tiles 5 are held magnetically in position when placed on the inside surface of the back wall 28 for storage. Moreover, when the component tiles 5 are in use and are placed on the board 1 and connected together they are similarly held in position by virtue of the cooperating magnetic means, that is the magnet on the base of each component tile 5 and the metal plate. Thus, the board 1 may be used in a manner similar to that described with reference to Figure 1 with different circuits being built by arranging and connecting appropriate component tiles 5 together and then connecting the circuit between the power rails 24.

By virtue of the small size of the boxes 25 in comparison with the board of Figure 1 fewer component tiles 5 would be provided with the boxes 25 than with the board of Figure 1.

In addition, instead of an oscilloscope or a voltmeter being provided pre-built into board 1, they may be mounted on individual tiles in a like manner to that of the other components. In this case, power is supplied to the power rails 24 from batteries which are provided on their own individual tiles. In addition, a battery management tile may also be provided so that different voltage supplies may be obtained from the power rails 24 from the same battery supply.

Components additional to those identified above which may be provided with the box include an electronic timer having its own battery for timing the charging of capacitors for example or a calculator which may be solar powered.

The box 25 also has a paper holder 31 mounted on the side wall 27a. The paper holder 31 is conventional in design and has two hoops which may be opened to engage papers on the hoops through holes punched through the papers. Information on the different components on the tiles 5 and for example lesson experiments may be provided on the paper holder 31. Moreover, wires 13 for connecting the components 4 on the tiles together may be cut into suitable lengths and provided in a plastic envelope also attached to the paper holder 31.

Thus, the box 25 may be opened to provide a magnetic board 1 on which the components tiles 5 may be manoeuvered and when closed the component tiles 5 and other apparatus are located within the box 25 and are therefore protected from accidental damage.

Depending upon the type of components provided the apparatus described above the apparatus could be used to teach from very basic electric theory to higher level electronics and systems technology. Thus, in such higher level kits larger tiles bearing more complicated sub-circuits may be provided for example amplifiers or communication tiles for permitting communication between an electronic circuit built on the board 1 and an external printer or computer.

Hence, with the apparatus described above children may be taught electrical theory and electronics by actually building their own circuits using the component tiles and following the instructions provided. The apparatus is both durable and simple to manipulate but moreover by virtue of the magnetic means provided between the board 1 and the individual component tiles 5, the tiles 5 do not move from a selected position accidentally and as a result the apparatus is more robust and reliable.

## Claims

1. Apparatus comprising a board (1); and a plurality of component tiles (5), each tile (5) bearing one or more electrical or electronic components (4) and connector means (9) for enabling the connection of at least one component (4) on a first component tile (5) with a component (4) on a further component tile (5) wherein the board (1) and the plurality of component tiles (5) have co-operable magnetic means whereby the component tiles (5) may be moved about the board (1) and when in a selected position on the board (1) are held in position magnetically.

2. The apparatus as claimed in claim 1, wherein the board (1) has a layer of metallic magnetically susceptible material (3) adjacent an upper surface and each of the component tiles (5) has a plastics magnetic material (8) mounted adjacent a base of the component tile (5).

3. The apparatus as claimed in either of claims 1 or 2, wherein the connector means is in the form of one or more upstanding coiled springs (9) electrically connected to the electrical or electronic component (4) on the component tile (5) whereby the spacings between individual coils of the spring may be widened to permit the introduction of an end of a wire (13) for forming an electrical connection with a further component tile (5).

4. The apparatus as claimed in claim 3, wherein a first end of the coiled spring (9) is mounted on the component tile (5) and a second opposing end of the coil spring (9) is free and has a loop (14) provided to be grasped by a user to assist in widening the spacings between the coils of the spring (9).

5. The apparatus as claimed in any one of the preceding claims, wherein the board (1) is formed integrally in a box (25).

6. The apparatus as claimed in any one of the preceding claims, wherein the board (1) is further provided with a plurality of power rails (24) each having a plurality of connector means (9) for enabling electrical connection from the power rails (24) to a component tile (5).

7. The apparatus as claimed in any one of claims 1 to 6, wherein a first portion of the plurality of component tiles (5) has resistors of differing resistive values mounted on the component tiles.

8. The apparatus as claimed in claim 7, wherein a second portion of the plurality of component tiles (5) has capacitors of differing capacitive values mounted on the component tiles.

9. The apparatus as claimed in any one of the preceding claims wherein an oscilloscope (15) is provided and is integral with the board (1).

10. The apparatus as claimed in claim 9, wherein the oscilloscope (15) also comprises means for supplying a power supply.
